# EUROPÄISCHE PATENTSCHRIFT

(11) **EP 3 997 752 B1**
(45) Veröffentlichungstag und Bekanntmachung des Hinweises auf die Patenterteilung: **02.04.2025**
(21) Anmeldenummer: 20729947.0
(22) Anmeldetag: 24.04.2020
(51) Int. Cl.: H01M 8/04664, H01M 8/04746

(54) **VERFAHREN ZUM BETREIBEN EINER BRENNSTOFFZELLE**
METHOD FOR OPERATING A FUEL CELL
PROCÉDÉ D'OPÉRATION D'UNE PILE DE COMBUSTIBLE

(30) Priorität: 10.07.2019 DE 102019210220
(43) Veröffentlichungstag der Anmeldung: 18.05.2022
(73) Patentinhaber: thyssenkrupp Marine Systems GmbH, 24143 Kiel (DE); thyssenkrupp AG, 45143 Essen (DE)
(72) Erfinder: KRUMMRICH, Stefan, 24634 Padenstedt (DE); POMMER, Hans, 24360 Barkelsby (DE)
(74) Vertreter: thyssenkrupp Intellectual Property GmbH
(86) Internationale Anmeldenummer: PCT/EP2020/061491
(87) Internationale Veröffentlichungsnummer: WO 2021/004666

(56) Entgegenhaltungen:
- EP-A1- 2 840 636
- EP-A2- 1 279 940
- DE-A1- 102015 224 333
- JP-A- 2006 269 337
- US-A1- 2004 018 404

## Beschreibung

Die Erfindung betrifft ein Verfahren zum Betreiben einer Brennstoffzelle.

Aus der EP 2 840 636 A1 ist eine Brennstoffzelle mit Zirkulationsbetrieb bekannt, bei welcher eine Inertgasentsorgung erfolgt.

Aus der WO 2010/056829 A2 ist ein Verfahren zur Abtrennung von Komponenten aus einem Gasstrom bekannt.

Aus der EP 2 687 282 A1 ist ein Verfahren zum Abscheiden von Wasserstoff aus einem wasserstoffhaltigen Gasgemisch in einer Membran mit hohem Spülgasdruck bekannt.

Aus der US 2004/018404 A1 ist eine Vorrichtung und ein Verfahren zum Schutz von Brennstoffzellen bekannt.

Aus der JP 2006 269337 A ist ein Brennstoffzellensystem bekannt, das Abnormalitäten im Betrieb detektieren kann.

Aus der EP 1 279 940 A2 ist ein Verfahren zur Erkennung eines Gaslecks in einer Brennstoffzelle bekannt.

Aus der DE 10 2015 224 333 A1 ist ein Verfahren zur Bestimmung der Anodenintegrität während eines Brennstoffzellenfahrzeugbetriebs bekannt.

Inertgase sind Gase, welche innerhalb der Brennstoffzelle nicht umgesetzt werden, sich inert verhalten. Die wichtigsten Inertgase sind Stickstoff (N₂) und Argon (Ar). Weitere sind beispielsweise Helium (He) oder Neon (Ne). Weitere Inertgase können die schwereren Edelgase oder auch nicht reaktive Halogenkohlenwasserstoffe sein.

Brennstoffzellen werden heute in Bereichen eingesetzt, in welchen die Verwendung klassischer Generatoren (auf Verbrennungsbasis) oftmals nicht oder nur eingeschränkt möglich ist. Beispielsweise werden Brennstoffzellen in Unterseebooten zur Energieversorgung in außenluftunabhängigen Antriebsystemen eingesetzt. Für diese Anwendungen ist es positiv, wenn die Brennstoffzellenvorrichtungen kompakt, robust und in sich geschlossen aufgebaut sind.

Als Edukte für den Betrieb einer Brennstoffzelle werden regelmäßig Sauerstoff, oftmals gespeichert als flüssiger Sauerstoff, und Wasserstoff, oftmals gespeichert in Metallhydrid, eingesetzt. Alternativ können Sauerstoff und Wasserstoff unter hohem Druck gespeichert. All diesen Quellen ist gemein, dass die Edukte praktisch wasserfrei sind. Weiter kann der Wasserstoff auch in einem Reformer aus anderen Verbindungen hergestellt werden.

Aus der DE 10 2015 209 802 A1 ist eine Rezirkulationsbrennstoffzellenvorrichtung bekannt.

Aus der DE 10 2006 005 175 A1 ist eine Vorrichtung zur Kontrolle des Differenzdrucks zwischen einem Anodenbereich und einem Kathodenbereich einer Brennstoffzelle bekannt.

Einer der Hauptgründe für das Versagen einer Brennstoffzelle ist die Entstehung von Löchern innerhalb der Membran. Dieses ist sehr problematisch, da durch solche Löcher Sauerstoff und Wasserstoff direkt in Kontakt treten können, was zu einem zündfähigen Gemisch innerhalb der Brennstoffzelle führen kann. Daher werden aus Sicherheitsgründen Brennstoffzellen, welche ein Loch innerhalb der Membran aufweisen, von der Gaszufuhr abgetrennt. Erschwerend kommt hinzu, dass im Bereich eines Loches durch die dort stattfindende Reaktion zwischen Wasserstoff und Sauerstoff Lokalwärme entsteht, welche durch die normale Kühlung regelmäßig nicht abgeführt werden kann, sodass das Loch typischerweise vergrößert wird.

Gerade bei der Verwendung einer Brennstoffzelle an Bord eines Unterseeboots ist es jedoch wünschenswert, den schadensbedingten Ausfall einer Brennstoffzelle beziehungsweise eines Brennstoffzellenmoduls zu vermeiden, da dieses entweder den Austausch der Brennstoffzelle beziehungsweise des Brennstoffzellenmoduls nach sich zieht oder bei einem Verzicht auf einen Austausch die Leistungsfähigkeit der Brennstoffzellenanlage als Ganzes entsprechend reduziert.

Aufgabe der Erfindung ist es, ein Verfahren zum Betreiben einer Brennstoffzelle bereitzustellen, mit dem ein Betrieb der Brennstoffzelle auch bei einer Undichtigkeit der Membran wenigstens zeitweise möglich ist.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zum Betreiben einer Kreislaufbrennstoffzellenvorrichtung mit einem Loch in der Membran verwendet eine Kreislaufbrennstoffzellenvorrichtung mit einem Anodenkreislauf und einen Kathodenkreislauf. Die Kreislaufbrennstoffzellenvorrichtung weist einen anodenseitigen Druckregler und einen kathodenseitigen Druckregler auf. Der kathodenseitige Druckregler ist zwischen dem Sauerstoffvorrat und der Kathodenseite der Brennstoffzelle angeordnet und der anodenseitige Druckregler ist zwischen dem Wasserstoffvorrat und der Anodenseite der Brennstoffzelle angeordnet. Das Verfahren weist die folgenden Schritte auf:
a) Feststellen eines Lochs in der Membran,
b) Veränderung der Betriebsparameter der Kreislaufbrennstoffzellenvorrichtung an den Betrieb mit einem Loch in der Membran.

Das Feststellen des Loches in der Membran kann auf vielfältige Weise festgestellt werden. Beispielsweise kann eine Temperaturerhöhung darauf hinweisen. Durch das Loch kommen Wasserstoff und Sauerstoff in direkten Kontakt und erzeugen Wärme. Ebenso sinkt die elektrische Leistung, da nicht mehr der Stoffumsatz elektrische Energie erzeugt. Ebenso kann bei einer bestehenden Druckdifferenz ein angleichen der Drücke auf ein Loch hinweisen.

Ein Loch in der Membran ist im Sinne der Erfindung breit zu verstehen. Es geht gerade darum, eine Membran, welche einen kleinen Defekt aufweist, der den Übertritt von Gas von der einen auf die andere Seite ermöglicht. Das kann ein Loch, ein Riss, eine Undichtigkeit an der Wand oder dergleichen sein. Kritisch hierbei ist, dass es durch das übertretende Gas zu einer direkten Reaktion unter Bildung von Wasser und Wärme kommt. Durch die direkte Reaktion kommt es zu einer starken Erwärmung aufgrund der stark exothermen Reaktion im Bereich des Loches, in dem die beiden Reaktanden aufeinander treffen. Durch diese lokale Überhitzung kann sich das Loch schnell vergrößern.

Um die Kreislaufbrennstoffzellenvorrichtung auch mit einem Loch in der Membran weiter betreiben zu können, weist das Verfahren zum Betrieb der Kreislaufbrennstoffzellenvorrichtung mit einem Loch in der Membran die folgenden Schritte auf:
c) Messen des Kathodendrucks zwischen dem kathodenseitigen Druckregler und der Kathodenseite der Brennstoffzelle,
d) Messen des Anodendrucks zwischen dem anodenseitigen Druckregler und der Anodenseite der Brennstoffzelle,
e) Vorgeben einer Drucktoleranzschwelle für die Druckdifferenz zwischen Kathodendruck und Anodendruck,
f) Regeln des kathodenseitigen Druckreglers und des anodenseitigen Druckreglers, so dass der Kathodendruck und der Anodendruck innerhalb der Drucktoleranzschwelle liegen.

Unter Messen des Drucks zwischen dem Druckregler und der Elektrodenseite der Brennstoffzelle ist zu verstehen, dass der Druck an einem beliebigen Punkt zwischen diesen beiden Elementen gemessen wird.

Unter Kathodendruck wird der Gasdruck auf der Kathodenseite der Brennstoffzelle verstanden, unter Anodendruck wird der Gasdruck auf der Anodenseite der Brennstoffzelle verstanden.

Durch eine möglichst geringe Druckdifferenz zwischen der Kathodenseite und der Anodenseite ist die durch ein Loch übertretende Menge an Wasserstoff beziehungsweise Sauerstoff begrenzt. Hierdurch wird die freiwerdende Wärmemenge begrenzt, was eine weitere Beschädigung im Bereich des Lochs verringert oder ganz vermeidet. Ist die freigesetzte Wärmemenge so gering, dass diese über die übliche Kühlvorrichtung einer Brennstoffzelle abgeführt werden kann, so kann die Brennstoffzelle normal betrieben werden.

Der Wasserstoffvorrat kann beispielsweise ein Wasserstofftank, insbesondere ein Druckgasspeicher, oder ein Metallhydridspeicher sein. Metallhydridspeicher sind schwerer, aber sicherer. Insbesondere für eine Anwendung an Bord eines Unterseeboots ist ein Metallhydridspeicher bevorzugt.

Der Sauerstoffvorrat kann insbesondere ein Sauerstofftank für flüssigen Sauerstoff sein.

Erfindungsgemäß wird im Kathodenkreislauf eine Konzentration an Inertgas von 30 Vol.-% bis 70 Vol.-%, bevorzugt von 40 Vol.-% bis 60 Vol.-%, eingestellt und im Anodenkreislauf wird eine Konzentration an Inertgas von 30 Vol.-% bis 70 Vol.-%, bevorzugt von 40 Vol.-% bis 60 Vol.-%, eingestellt.

Durch den vergleichsweise hohen Anteil an Inertgas wird eine weitere Verbesserung erreicht. Durch den Anteil an Inertgas wird prozentual der Anteil an Sauerstoff beziehungsweise Wasserstoff reduziert, welcher übergeht. Hierdurch wird im Bereich des Lochs die Menge an reaktionsfähigen Partnern reduziert, so dass diese bei einer Reaktion am Loch weniger Wärme entsteht und die Reaktion durch eine Abreicherung der Reaktionspartner gestoppt oder zumindest so weit verlangsamt werden kann, dass die Membran keine weiteren Schäden erhält. Des Weiteren kann das Inertgas Wärme aufnehmen und abtransportieren, sodass eine lokale Erhitzung und damit weitere Schädigung der Membran weiter reduziert werden kann.

In einer weiteren Ausführungsform der Erfindung wird in Schritt e) eine Drucktoleranzschwelle von ± 10 kPa, bevorzugt von ± 5 kPa vorgegeben wird. Somit weichen Anodendruck und Kathodendruck um maximal diesen Wert voneinander ab. Somit resultiert aus der geringen Druckdifferenz auch nur ein geringer Gasstrom, welcher durch ein Loch strömt.

In einer weiteren Ausführungsform der Erfindung wird eine Kreislaufbrennstoffzellenvorrichtung ausgewählt, bei welcher der Druckabfall der Anodenseite und der Kathodenseite der Brennstoffzelle gleich groß ist. Unter gleich groß wird hier im Sinne der Erfindung verstanden, dass die Druckdifferenz sich um weniger als 10 kPa, bevorzugt um weniger als 5 kPa unterscheidet.

In einer weiteren Ausführungsform der Erfindung weist das Verfahren die folgenden Schritte auf:
g) Erfassen der Spannung der Brennstoffzelle,
h) Erfassen des Stromes der Brennstoffzelle.

In einer weiteren Ausführungsform der Erfindung weist das Verfahren die folgenden Schritte auf:
i) Erfassen des Sauerstoffstromes in die Brennstoffzelle,
j) Erfassen des Wasserstoffstromes in die Brennstoffzelle,
k) Ermitteln der elektrischen Ausbeute.

Unter dem Sauerstoffstrom beziehungsweise Wasserstoffstrom wird durchlaufende Stoffmenge verstanden, also wie viele Moleküle, Mol oder welche Masse in einem Zeitintervall durchtritt (Stoffstrom). Unter Kenntnis des Drucks und der Temperatur eignet sich daher vor allem die Messung des Volumenstromes, also die Messung Volumens an Wasserstoffgas oder Sauerstoffgas, welches in einem Zeitintervall durchfließt.

Hat man beispielsweise einen konstanten Stoffstrom, die abgegebene elektrische Leistung als Produkt aus (elektrischem) Strom und Spannung sinkt, so sinkt die elektrische Ausbeute erkennbar. Daraus ergibt sich, dass es zu einem Stoffumsatz kommt, welcher nicht über den gewünschten Prozess erfolgt. Dieses deutet darauf hin, dass Wasserstoff und Sauerstoff durch ein Loch in Kontakt treten und direkt miteinander reagieren.

In einer weiteren Ausführungsform der Erfindung wird eine Kreislaufbrennstoffzellenvorrichtung an Bord eines Unterseebootes ausgewählt. Ein Verfahren zum Betrieb einer Kreislaufbrennstoffzellenvorrichtung an Bord eines Unterseeboots unterscheidet sich von einem Verfahren zum Betrieb einer Kreislaufbrennstoffzellenvorrichtung an Land. Zum einen schwankt in einem Unterseeboot der Umgebungsdruck deutlich, von etwa 60 kPa bis 140 kPa. Zum anderen ist der Austausch und die Wartung an Bord eines Unterseebootes auf Grund der räumlichen Beengtheit extrem erschwert. Des Weiteren müssen alle Ersatzteile mitgeführt werden, was wiederum die Kapazität für andere Nutzlasten reduziert. Eine Nachlieferung von Ersatzteilen kann im Einsatz unmöglich sein. Auch kann eine Leistungsreduktion der Stromversorgung unter solchen Umständen missionskritisch sein.

In einer weiteren Ausführungsform der Erfindung kann das erfindungsgemäße Verfahren im Wechsel mit einem Verfahren nach dem Stand der Technik, also ohne relative Druckerfassung und relative Druckregelung, durchgeführt werden. Beispielsweise kann das erfindungsgemäße Verfahren nur durchgeführt werden, wenn es Hinweise auf einen Defekt gibt, beispielsweise Temperaturerhöhung, Spannungsverlauf oder Zusammensetzung des Produktgasstromes.

In einer weiteren Ausführungsform der Erfindung kann über eine der beiden Inertgaszuführungen ein Detektionsinertgas nur zu einer Hälfte, also nur zur Kathodenseite oder nur zur Anodenseite, zugegeben werden. Wird dieses Inertgas auf der anderen Seite detektiert, Das Detektionsinertgas muss sich vom Inertgas unterscheiden. Beispielsweise wird Stickstoff als Inertgas verwendet und Helium als Detektionsinertgas. Helium lässt sich insbesondere massenspektroskopisch leicht detektieren. Besonders bevorzugt wird ³He als Detektionsinertgas verwendet.

In einer weiteren Ausführungsform der Erfindung wird die vorgegebene Drucktoleranzschwelle verringert, sobald ein Loch detektiert wurde. Hierdurch ist eine einfache Prozessführung möglich, solange keine Probleme an der Membran vorliegen.

In einer weiteren Ausführungsform der Erfindung erfolgt die aktive Regelung des Druckes nur über den anodenseitigen Druckregler oder den kathodenseitigen Druckregler. Hierdurch muss die Feinjustage des Druckes nur durch einen der beiden Druckregler erfolgen, der andere dient nur zur Grobeinstellung. Hierdurch kann ein Druckregler einfacher ausgeführt werden und auch Steuerung und Regelung ist einfacher, da nur ein Druck gezielt nachgeregelt wird.

In einem weiteren Aspekt betrifft die Erfindung eine Kreislaufbrennstoffzellenvorrichtung, wobei die Kreislaufbrennstoffzellenvorrichtung wenigstens eine Brennstoffzelle mit einer Anodenseite und einer Kathodenseite, einen Sauerstoffvorrat und einen Wasserstoffvorrat, einen Kathodenkreislauf und einen Anodenkreislauf aufweist. Die Kreislaufbrennstoffzellenvorrichtung weist einen anodenseitigen Druckregler und einen kathodenseitigen Druckregler auf, wobei der kathodenseitige Druckregler zwischen dem Sauerstoffvorrat und der Kathodenseite der Brennstoffzelle angeordnet ist und der anodenseitige Druckregler zwischen dem Wasserstoffvorrat und der Anodenseite der Brennstoffzelle angeordnet ist. Die Kreislaufbrennstoffzellenvorrichtung weist eine anodenseitige Druckmessvorrichtung und eine kathodenseitige Druckmessvorrichtung auf, wobei die kathodenseitige Druckmessvorrichtung zwischen dem kathodenseitigen Druckregler und der Kathodenseite der Brennstoffzelle angeordnet ist und die anodenseitige Druckmessvorrichtung zwischen dem anodenseitigen Druckregler und der Anodenseite der Brennstoffzelle angeordnet ist. Die Kreislaufbrennstoffzellenvorrichtung weist eine Regelvorrichtung auf, wobei die Regelvorrichtung mit der kathodenseitigen Druckmessvorrichtung, der anodenseitigen Druckmessvorrichtung, den kathodenseitigen Druckregler und dem anodenseitigen Druckregler verbunden ist. Die Regelvorrichtung ist zur Auswertung der von der kathodenseitigen Druckmessvorrichtung und der anodenseitigen Druckmessvorrichtung erfassten Drücke sowie zur Ansteuerung des kathodenseitigen Druckreglers und des anodenseitigen Druckreglers ausgebildet.

Die Regelvorrichtung weist einen ersten Betriebsmodus für den Regelbetrieb auf. Weiter weist die Regelvorrichtung einen zweiten Betriebsmodus auf, wobei der zweite Betriebsmodus zum Betreiben der Kreislaufbrennstoffzellenvorrichtung mit einem Loch in der Membran ausgelegt ist.

**In** einer weiteren Ausführungsform der Erfindung ist die kathodenseitige Druckmessvorrichtung im Kathodenkreislauf und die anodenseitige Druckmessvorrichtung im Anodenkreislauf angeordnet.

**In** einer alternativen Ausführungsform der Erfindung ist die kathodenseitige Druckmessvorrichtung zwischen dem kathodenseitigen Druckregler und dem Kathodenkreislauf und die anodenseitige Druckmessvorrichtung zwischen dem anodenseitigen Druckregler und dem Anodenkreislauf angeordnet.

**In** einer weiteren Ausführungsform der Erfindung ist die Regelvorrichtung zur Durchführung des erfindungsgemäßen Verfahrens ausgeführt.

**In** einer weiteren Ausführungsform der Erfindung weist die Kreislaufbrennstoffzellenvorrichtung einen zweiten kathodenseitigen Druckregler auf. Der erste kathodenseitige Druckregler ist zwischen dem zweiten kathodenseitigen Druckregler und der Kathodenseite der Kathodenseite angeordnet. Insbesondere dient der zweite kathodenseitige Druckregler zur groben Druckeinstellung, beispielsweise nach dem Sauerstoffverdampfer. Weiter bevorzugt weist die Kreislaufbrennstoffzellenvorrichtung wenigstens eine erste Brennstoffzelle und eine zweite Brennstoffzelle auf. Vor der ersten Brennstoffzelle ist ein erster erster kathodenseitiger Druckregler angeordnet, vor der zweiten Brennstoffzelle ein zweiter erster kathodenseitiger Druckregler. Somit übernimmt der erste kathodenseitige Druckregler die Feineinstellung des Druckes. Somit dient der zweite kathodenseitige Druckregler als Grobregler und die beiden ersten kathodenseitigen Druckregler als Feinregler, wobei eine Abstimmung unterschiedlich erfolgen kann, insbesondere, wenn beispielsweise die erste Brennstoffzelle einen Membrandefekt aufweist und die zweite Brennstoffzelle nicht.

**In** einer weiteren Ausführungsform der Erfindung weist die Kreislaufbrennstoffzellenvorrichtung einen zweiten anodenseitigen Druckregler auf. Der erste anodenseitige Druckregler ist zwischen dem zweiten anodenseitigen Druckregler und der Anodenseite der Anodenseite angeordnet. Insbesondere dient der zweite anodenseitige Druckregler zur groben Druckeinstellung, beispielsweise nach dem Wasserstofftank. Weiter bevorzugt weist die Kreislaufbrennstoffzellenvorrichtung wenigstens eine erste Brennstoffzelle und eine zweite Brennstoffzelle auf. Vor der ersten Brennstoffzelle ist ein erster erster anodenseitiger Druckregler angeordnet, vor der zweiten Brennstoffzelle ein zweiter erster anodenseitiger Druckregler. Somit übernimmt der erste anodenseitige Druckregler die Feineinstellung des Druckes. Somit dient der zweite anodenseitige Druckregler als Grobregler und die beiden ersten anodenseitigen Druckregler als Feinregler, wobei eine Abstimmung unterschiedlich erfolgen kann, insbesondere, wenn beispielsweise die erste Brennstoffzelle einen Membrandefekt aufweist und die zweite Brennstoffzelle nicht.

In einer weiteren Ausführungsform der Erfindung weist die Kreislaufbrennstoffzellenvorrichtung eine zweite kathodenseitige Druckmessvorrichtung auf, wobei die zweite kathodenseitige Druckmessvorrichtung hinter der Kathodenseite der Brennstoffzelle angeordnet ist.

In einer weiteren Ausführungsform der Erfindung weist die Kreislaufbrennstoffzellenvorrichtung eine zweite anodenseitige Druckmessvorrichtung auf, wobei die zweite anodenseitige Druckmessvorrichtung hinter der Anodenseite der Brennstoffzelle angeordnet ist.

In einer weiteren Ausführungsform der Erfindung weist die Kreislaufbrennstoffzellenvorrichtung eine dritte kathodenseitige Druckmessvorrichtung auf, wobei die dritte kathodenseitige Druckmessvorrichtung hinter ersten kathodenseitigen Druckmessvorrichtung und vor der Kathodenseite der Brennstoffzelle angeordnet ist. Hierdurch kann die Messgenauigkeit erhöht werden.

In einer weiteren Ausführungsform der Erfindung weist die Kreislaufbrennstoffzellenvorrichtung eine dritte anodenseitige Druckmessvorrichtung auf, wobei die dritte anodenseitige Druckmessvorrichtung hinter ersten anodenseitigen Druckmessvorrichtung und vor der Kathodenseite der Brennstoffzelle angeordnet ist. Hierdurch kann die Messgenauigkeit erhöht werden.

In einem weiteren Aspekt betrifft die Erfindung Kreislaufbrennstoffzellenvorrichtung an Bord eines Unterseebootes.

Nachfolgend ist die erfindungsgemäße Kreislaufbrennstoffzellenvorrichtung anhand von in den Zeichnungen dargestellten Ausführungsbeispielen näher erläutert.
Fig. 1 erste Ausführungsform)
Fig. 2 zweite Ausführungsform
Fig. 3 dritte Ausführungsform
Fig. 4 vierte Ausführungsform

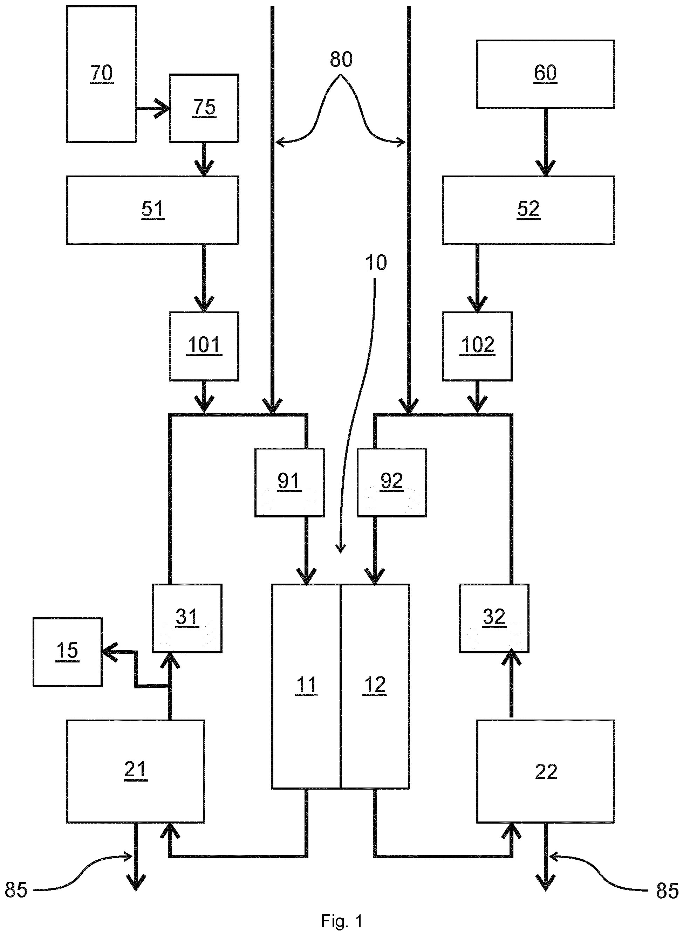

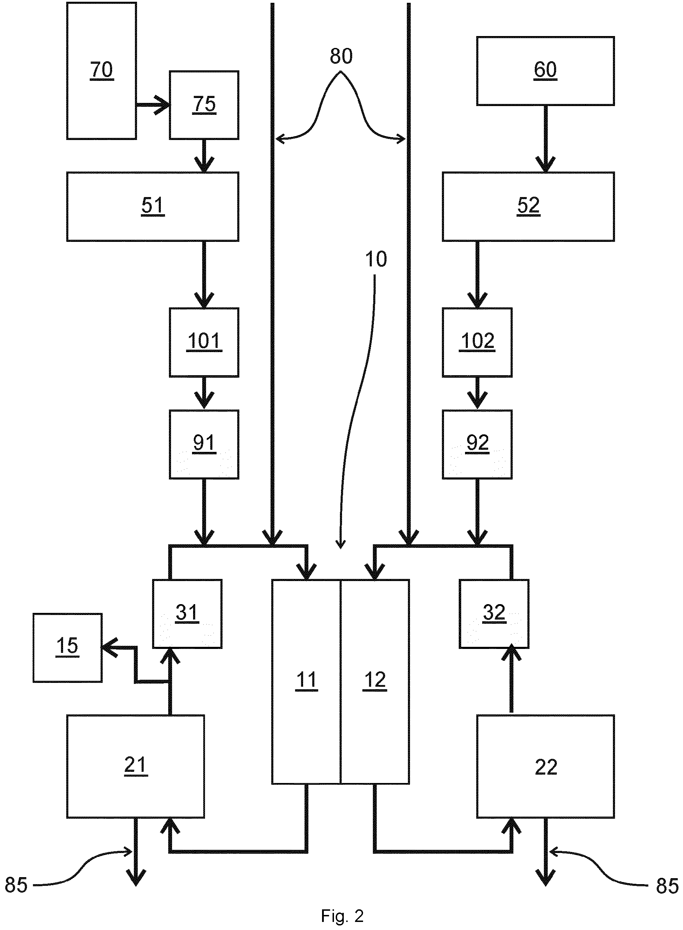

In Fig. 1 und in Fig. 2 sind zwei beispielshafte Kreislaufbrennstoffzellenvorrichtung schematisch dargestellt. Die Kreislaufbrennstoffzellenvorrichtung weist eine Brennstoffzelle 10 mit einer Kathodenseite 11 und einer Anodenseite 12 auf. An der Kathodenseite 11 erfolgt die Reduktion von O₂ zu O²⁻, an der Anodenseite 12 die Oxidation von H₂ zu H⁺. Das aus der Kathodenseite 11 der Brennstoffzelle 10 austretende Kathodengas wird über einen ersten Wasserabscheider 21 und einen Verdichter 31 rezirkuliert. Das aus der Anodenseite 12 der Brennstoffzelle 10 austretende Anodengas wird über einen zweiten Wasserabscheider 22 und einen Verdichter 32 rezirkuliert. Über ein Ablassventil 15 wird ein Teil des Kathodengasstroms an die Umgebungsluft abgegeben. Aus dem ersten Wasserabscheider 21 und dem zweiten Wasserabscheider 22 kann Wasser über einen Wasserablass 85 aus dem Kreislauf entfernt werden.

Zur Zuführung neuer Edukte verfügt die Kreislaufbrennstoffzellenvorrichtung über einen Wasserstofftank 60 und einen Sauerstofftank 70, vorzugsweise für flüssigen Sauerstoff, über einen Überhitzer 75. Der Sauerstoff wird über einen ersten Befeuchter 51 in den Kathodenkreislauf eingebracht, der Wasserstoff über einen zweiten Befeuchter 52 in den Anodenkreislauf. Der erste Befeuchter 51 und der zweite Befeuchter 52 weisen vorzugsweise eine wasserdurchlässige Membran auf, vorzugsweise aus einem sulfonierten Tetrafluorethylen-Polymer, beispielsweise Nafion (DuPont) oder Flemion (Asahi). Zur Inbetriebnahme der Brennstoffzelle können über Inertgaszuführungen 80 Inertgas, vorzugsweise Stickstoff, in den Anodengaskreis und den Kathodengaskreis eingebracht werden und so die gewünschten Bedingungen eingestellt werden.

Wesentlich ist ein kathodenseitiger Druckregler 101 und ein anodenseitiger Druckregler 102, welche jeweils vor dem Rezirkulationskreislauf angeordnet sind.

Das in Fig. 1 gezeigte erste Ausführungsbeispiel weist eine kathodenseitige Druckmessvorrichtung 91 und eine anodenseitige Druckmessvorrichtung 92 auf. Diese sind wie dargestellt innerhalb des Rezirkulationskreislaufes angeordnet. Hierdurch wird die Genauigkeit der Druckeinstellung erhöht.

Das in Fig. 2 gezeigte zweite Ausführungsbeispiel weist eine kathodenseitige Druckmessvorrichtung 91 und eine anodenseitige Druckmessvorrichtung 92 auf. Diese sind wie dargestellt außerhalb des Rezirkulationskreislaufes angeordnet. Hierdurch wird der Druckverlust innerhalb des Rezirkulationskreislaufes reduziert.

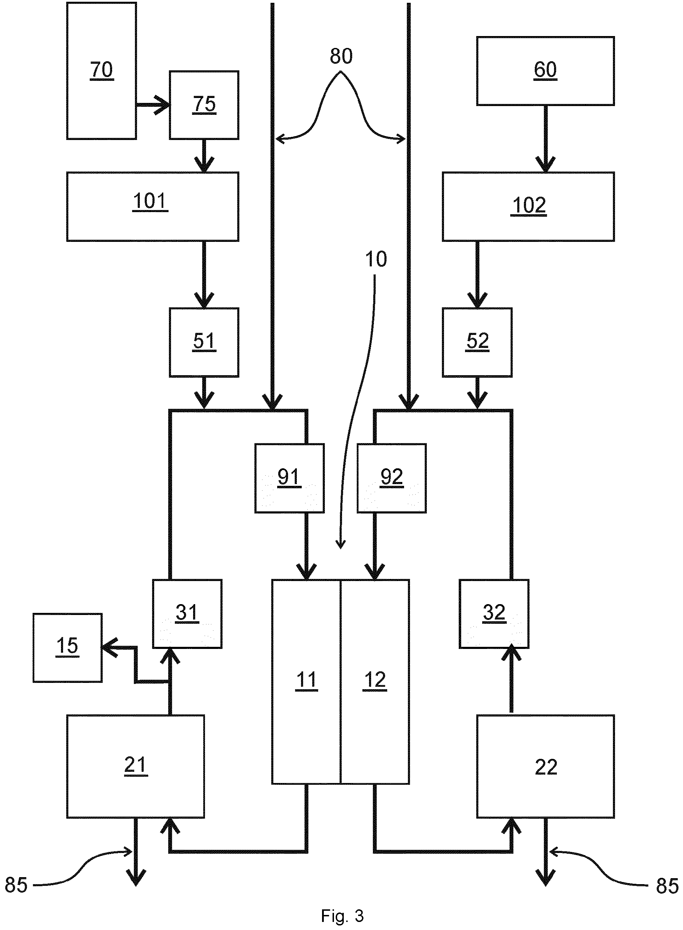

Die in Fig. 3 gezeigte dritte Ausführungsform unterscheidet sich von der in Fig. 1 gezeigten ersten Ausführungsform darin, dass der erste Befeuchter 51 hinter dem kathodenseitigen Druckregler 101 angeordnet ist und der zweite Befeuchter 52 hinter dem anodenseitigen Druckregler 101 angeordnet ist.

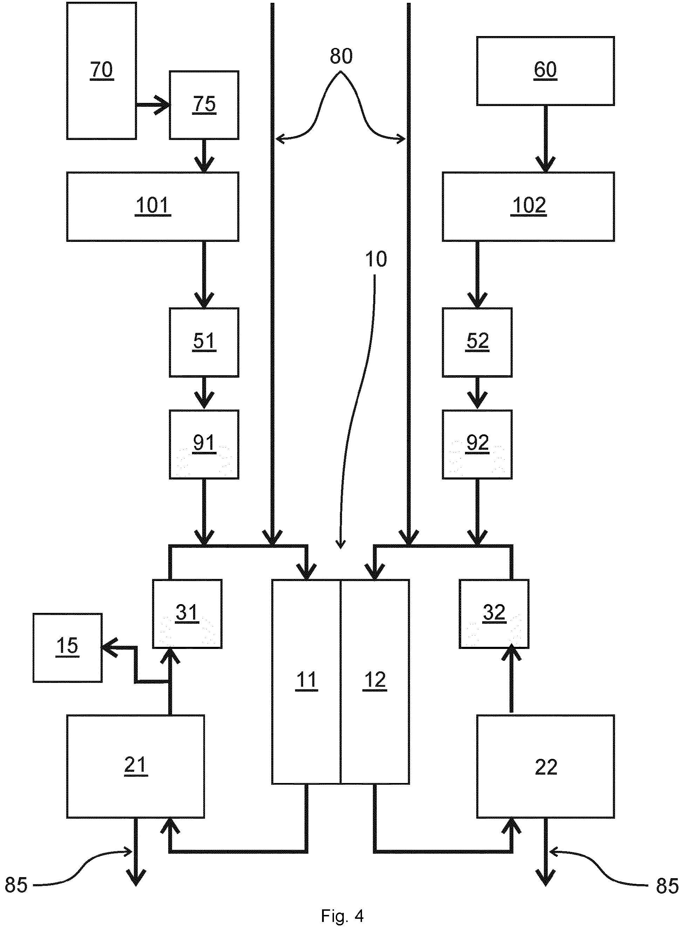

Die in Fig. 4 gezeigte vierte Ausführungsform unterscheidet sich von der in Fig. 2 gezeigten zweiten Ausführungsform darin, dass der erste Befeuchter 51 hinter dem kathodenseitigen Druckregler 101 angeordnet ist und der zweite Befeuchter 52 hinter dem anodenseitigen Druckregler 101 angeordnet ist.

### Bezugszeichen

- 10: Brennstoffzelle
- 11: Kathodenseite
- 12: Anodenseite
- 15: Ablassventil
- 21: erster Wasserabscheider
- 22: zweiter Wasserabscheider
- 31: Verdichter
- 32: Verdichter
- 51: erster Befeuchter
- 52: zweiter Befeuchter
- 60: Wasserstofftank
- 70: Sauerstofftank
- 75: Überhitzer
- 80: Inertgaszuführung
- 85: Wasserablass
- 91: kathodenseitige Druckmessvorrichtung
- 92: anodenseitige Druckmessvorrichtung
- 101: kathodenseitigen Druckregler
- 102: anodenseitigen Druckregler

## Patentansprüche

1. Verfahren zum Betreiben einer Kreislaufbrennstoffzellenvorrichtung mit einem Loch in der Membran, wobei die Kreislaufbrennstoffzellenvorrichtung einen Anodenkreislauf und einen Kathodenkreislauf aufweist, wobei die Kreislaufbrennstoffzellenvorrichtung einen anodenseitigen Druckregler (102) und einen kathodenseitigen Druckregler (101) aufweist, wobei der kathodenseitige Druckregler (101) zwischen dem Sauerstoffvorrat und der Kathodenseite (11) der Brennstoffzelle (10) angeordnet ist, wobei der anodenseitige Druckregler (102) zwischen dem Wasserstoffvorrat und der Anodenseite (12) der Brennstoffzelle (10) angeordnet ist, wobei das Verfahren die folgenden Schritte aufweist:
a) Feststellen eines Lochs in der Membran,
b) Veränderung der Betriebsparameter der Kreislaufbrennstoffzellenvorrichtung an den Betrieb mit einem Loch in der Membran,
wobei das Verfahren während des Betriebes der Kreislaufbrennstoffzellenvorrichtung mit einem Loch in der Membran die folgenden Schritte aufweist:
c) Messen des Kathodendrucks zwischen dem kathodenseitigen Druckregler (101) und der Kathodenseite (11) der Brennstoffzelle (10),
d) Messen des Anodendrucks zwischen dem anodenseitigen Druckregler (102) und der Anodenseite (12) der Brennstoffzelle (10),
e) Vorgeben einer Drucktoleranzschwelle für die Druckdifferenz zwischen Kathodendruck und Anodendruck,
f) Regeln des kathodenseitigen Druckreglers (101) und des anodenseitigen Druckreglers (102), sodass der Kathodendruck und der Anodendruck innerhalb der Drucktoleranzschwelle liegen,
und **dadurch gekennzeichnet ist, dass** im Kathodenkreislauf eine Konzentration an Inertgas von 30 Vol.-% bis 70 Vol.-%, bevorzugt von 40 Vol.-% bis 60 Vol.-%, eingestellt wird, wobei im Anodenkreislauf eine Konzentration an Inertgas von 30 Vol.-% bis 70 Vol.-%, bevorzugt von 40 Vol.-% bis 60 Vol.-%, eingestellt wird.

2. Verfahren nach Anspruch 1, **dadurch gekennzeichnet, dass** in Schritt e) eine Drucktoleranzschwelle von ± 10 kPa, bevorzugt von ± 5 kPa vorgegeben wird.

3. Verfahren nach einem der vorstehenden Ansprüche, **dadurch gekennzeichnet, dass** eine Kreislaufbrennstoffzellenvorrichtung ausgewählt wird, bei welcher der Druckabfall der Anodenseite (12) und der Kathodenseite (11) der Brennstoffzelle (10) gleich groß ist.

4. Verfahren nach einem der vorstehenden Ansprüche, **dadurch gekennzeichnet, dass** zusätzlich die folgenden Schritte aufweist:
g) Erfassen der Spannung der Brennstoffzelle (10),
h) Erfassen des Stromes der Brennstoffzelle (10).

5. Verfahren nach Anspruch 4, **dadurch gekennzeichnet, dass** zusätzlich die folgenden Schritte aufweist:
i) Erfassen des Sauerstoffstromes in die Brennstoffzelle (10),
j) Erfassen des Wasserstoffstromes in die Brennstoffzelle (10),
k) Ermitteln der elektrischen Ausbeute.

6. Kreislaufbrennstoffzellenvorrichtung, wobei die Kreislaufbrennstoffzellenvorrichtung wenigstens eine Brennstoffzelle (10) mit einer Anodenseite (12) und einer Kathodenseite (11) aufweist, wobei die Kreislaufbrennstoffzellenvorrichtung einen Sauerstoffvorrat und einen Wasserstoffvorrat aufweist, wobei die Kreislaufbrennstoffzellenvorrichtung einen Kathodenkreislauf und einen Anodenkreislauf aufweist, wobei die Kreislaufbrennstoffzellenvorrichtung einen anodenseitigen Druckregler (102) und einen kathodenseitigen Druckregler (101) aufweist, wobei der kathodenseitige Druckregler (101) zwischen dem Sauerstoffvorrat und der Kathodenseite (11) der Brennstoffzelle (10) angeordnet ist, wobei der anodenseitige Druckregler (102) zwischen dem Wasserstoffvorrat und der Anodenseite (12) der Brennstoffzelle (10) angeordnet ist, wobei die Kreislaufbrennstoffzellenvorrichtung eine anodenseitige Druckmessvorrichtung (92) und eine kathodenseitige Druckmessvorrichtung (91) aufweist, wobei die kathodenseitige Druckmessvorrichtung (91) zwischen dem kathodenseitigen Druckregler (101) und der Kathodenseite (11) der Brennstoffzelle (10) angeordnet ist, wobei die anodenseitige Druckmessvorrichtung (92) zwischen dem anodenseitigen Druckregler (102) und der Anodenseite (12) der Brennstoffzelle (10) angeordnet ist, wobei die Kreislaufbrennstoffzellenvorrichtung eine Regelvorrichtung aufweist, wobei die Regelvorrichtung mit der kathodenseitigen Druckmessvorrichtung (91), der anodenseitigen Druckmessvorrichtung (92), den kathodenseitigen Druckregler (101) und dem anodenseitigen Druckregler (102) verbunden ist, wobei die Regelvorrichtung zur Auswertung der von der kathodenseitigen Druckmessvorrichtung (91) und der anodenseitigen Druckmessvorrichtung (92) erfassten Drücke ausgebildet ist, wobei die Regelvorrichtung zur Ansteuerung des kathodenseitigen Druckreglers (101) und des anodenseitigen Druckreglers (102) ausgebildet ist, wobei die Regelvorrichtung einen ersten Betriebsmodus für den Regelbetrieb aufweist, wobei die Regelvorrichtung einen zweiten Betriebsmodus aufweist, wobei der zweite Betriebsmodus zum Betreiben der Kreislaufbrennstoffzellenvorrichtung mit einem Loch in der Membran ausgelegt ist, und **dadurch gekennzeichnet ist, dass** im Kathodenkreislauf eine Konzentration an Inertgas von 30 Vol.-% bis 70 Vol.-%, bevorzugt von 40 Vol.-% bis 60 Vol.-%, beträgt, wobei im Anodenkreislauf eine Konzentration an Inertgas von 30 Vol.-% bis 70 Vol.-%, bevorzugt von 40 Vol.-% bis 60 Vol.-%, beträgt.

7. Kreislaufbrennstoffzellenvorrichtung nach Anspruch 6, **dadurch gekennzeichnet, dass** die kathodenseitige Druckmessvorrichtung (91) im Kathodenkreislauf angeordnet ist, wobei die anodenseitige Druckmessvorrichtung (92) im Anodenkreislauf angeordnet ist.

8. Kreislaufbrennstoffzellenvorrichtung nach einem der Ansprüche 6 bis 7, **dadurch gekennzeichnet, dass** die kathodenseitige Druckmessvorrichtung (91) zwischen dem kathodenseitigen Druckregler (101) und dem Kathodenkreislauf angeordnet ist, wobei die anodenseitige Druckmessvorrichtung (92) zwischen dem anodenseitigen Druckregler (102) und dem Anodenkreislauf angeordnet ist.

## Claims

1. Method for operating a fuel cell device with a hole in the membrane, wherein the fuel cell device has an anode circuit and a cathode circuit, wherein the fuel cell device has an anode-side pressure controller (102) and a cathode-side pressure controller (101), wherein the cathode-side pressure regulator (101) is arranged between the oxygen supply and the cathode side (11) of the fuel cell (10), wherein the anode-side pressure regulator (102) is arranged between the hydrogen supply and the anode side (12) of the fuel cell (10), wherein the method comprises the following steps:
a) detecting a hole in the membrane,
b) modifying the operating parameters of the fuel cell device to operation with a hole in the membrane,
wherein the method contains during operation of the fuel cell device with a hole in the membrane, the following steps are performed:
c) measuring the cathode pressure between the cathode-side pressure controller (101) and the cathode side (11) of the fuel cell (10),
d) measuring the anode pressure between the anode-side pressure controller (102) and the anode side (12) of the fuel cell (10),
e) setting a pressure tolerance threshold for the pressure difference between the cathode pressure and the anode pressure,
f) controlling the cathode-side pressure controller (101) and the anode-side pressure controller (102) so that the cathode pressure and the anode pressure are within the pressure tolerance threshold,
**characterized in that** a concentration of inert gas of 30 vol.% to 70 vol.%, preferably of 40 vol.% to 60 vol.%, is set in the cathode circuit, wherein a concentration of inert gas of 30 vol.% to 70 vol.%, preferably of 40 vol.% to 60 vol. %.

2. The process according to claim 1, **characterized in that** a pressure tolerance threshold of ± 10 kPa, preferably of ± 5 kPa, is set in step e).

3. A method according to one of the preceding claims, **characterized in that** a fuel cell device is selected in which the pressure drop of the anode side (12) and the cathode side (11) of the fuel cell (10) is the same.

4. A method according to one of the preceding claims, **characterized in that** it additionally comprises the following steps:
g) measuring the voltage of the fuel cell (10),
h) measuring the current of the fuel cell (10).

5. Method according to claim 4, **characterized in that** it additionally comprises the following steps:
i) measuring the oxygen flow into the fuel cell (10),
j) measuring the hydrogen flow into the fuel cell (10),
k) determining the electrical yield.

6. A fuel cell device, wherein the fuel cell device has at least one fuel cell (10) with an anode side (12) and a cathode side (11), the fuel cell circuit device having an oxygen supply and a hydrogen supply, the fuel cell circuit device having a cathode circuit and an anode circuit, the fuel cell circuit device having an anode-side pressure controller (102) and a cathode-side pressure controller (101), wherein the cathode-side pressure regulator (101) is arranged between the oxygen supply and the cathode side (11) of the fuel cell (10), wherein the anode-side pressure regulator (102) is arranged between the hydrogen supply and the anode side (12) of the fuel cell (10), the fuel cell device having an anode-side pressure measuring device (92) and a cathode-side pressure measuring device (91), the cathode-side pressure measuring device (91) being arranged between the cathode-side pressure controller (101) and the cathode side (11) of the fuel cell (10), wherein the anode side pressure sensing device (92) is arranged between the anode side pressure regulator (102) and the anode side (12) of the fuel cell (10), wherein the fuel cell stack device comprises a control device, wherein the control device is connected to the cathode side pressure sensing device (91), the anode-side pressure measuring device (92), the cathode-side pressure controller (101) and the anode-side pressure controller (102), the control device being designed to evaluate the pressures detected by the cathode-side pressure measuring device (91) and the anode-side pressure measuring device (92), the control device being designed to control the cathode-side pressure controller (101) and the anode-side pressure controller (102), the control device having a first operating mode for the control operation, the control device having a second operating mode, the second operating mode being designed for operating the fuel cell device with a hole in the membrane, **characterized in that** in the cathode circuit a concentration of inert gas is from 30% by volume to 70% by volume, preferably from 40% by volume to 60% by volume, and in the anode circuit a concentration of inert gas is from 30% by volume to 70% by volume, preferably from 40% by volume to 60% by volume.

7. A fuel cell device according to claim 6, **characterized in that** the cathode-side pressure measuring device (91) is arranged in the cathode circuit, with the anode-side pressure measuring device (92) being arranged in the anode circuit.

8. A fuel cell device according to one of claims 6 to 7, **characterized in that in that** the cathode-side pressure measuring device (91) is arranged between the cathode-side pressure controller (101) and the cathode circuit, the anode-side pressure measuring device (92) being arranged between the anode-side pressure controller (102) and the anode circuit.

## Revendications

1. Procédé de fonctionnement d'un dispositif de pile à combustible avec un trou dans la membrane, dans lequel le dispositif de pile à combustible a un circuit d'anode et un circuit de cathode, dans lequel le dispositif de pile à combustible a un régulateur de pression côté anode (102) et un régulateur de pression côté cathode (101), dans lequel le régulateur de pression côté cathode (101) est disposé entre l'alimentation en oxygène et le côté cathode (11) de la pile à combustible (10), dans lequel le régulateur de pression côté anode (102) est disposé entre l'alimentation en hydrogène et le côté anode (12) de la pile à combustible (10), dans lequel le procédé comprend les étapes suivantes :
a) détection d'un trou dans la membrane,
b) modifier les paramètres de fonctionnement du dispositif de pile à combustible pour qu'il fonctionne avec un trou dans la membrane,
dans lequel le procédé comprend les étapes suivantes pendant le fonctionnement du dispositif de pile à combustible avec un trou dans la membrane :
c) mesurer la pression cathodique entre le régulateur de pression côté cathode (101) et le côté cathode (11) de la pile à combustible (10),
d) mesurer la pression anodique entre le régulateur de pression côté anode (102) et le côté anode (12) de la pile à combustible (10),
e) fixer un seuil de tolérance de pression pour la différence de pression entre la pression cathodique et la pression anodique,
f) commander le régulateur de pression côté cathode (101) et le régulateur de pression côté anode (102) de telle sorte que la pression cathodique et la pression anodique se situent dans le seuil de tolérance de pression,
**caractérisé en ce qu'**une concentration de gaz inerte de 30 % en volume à 70 % en volume, de préférence de 40 % en volume à 60 % en volume, est réglée dans le circuit cathodique, dans lequel une concentration de gaz inerte de 30 % en volume à 70 % en volume, de préférence de 40 % en volume à 60 % en volume, est réglée dans le circuit cathodique.

2. Procédé selon la revendication 1, **caractérisé en ce qu'**un seuil de tolérance de pression de ± 10 kPa, de préférence de ± 5 kPa, est défini à l'étape e).

3. Procédé selon l'une des revendications précédentes, **caractérisé en ce qu'**un dispositif de pile à combustible est sélectionné dans lequel la chute de pression du côté anode (12) et du côté cathode (11) de la pile à combustible (10) est la même.

4. Procédé selon l'une des revendications précédentes, **caractérisé en ce qu'**il comprend en outre les étapes suivantes :
g) mesurer la tension de la pile à combustible (10),
h) mesurer le courant de la pile à combustible (10).

5. Procédé selon la revendication 4, **caractérisé en ce qu'**il comprend en outre les étapes suivantes :
i) mesurer le débit d'oxygène dans la pile à combustible (10),
j) mesurer le débit d'hydrogène entrant dans la pile à combustible (10),
k) déterminer le rendement électrique.

6. Dispositif de pile à combustible, dans lequel le dispositif de pile à combustible comporte au moins une pile à combustible (10) avec un côté anode (12) et un côté cathode (11), le dispositif de circuit de pile à combustible comportant une alimentation en oxygène et une alimentation en hydrogène, le dispositif de circuit de pile à combustible comportant un circuit cathodique et un circuit anodique, le dispositif de circuit de pile à combustible comportant un régulateur de pression côté anode (102) et un régulateur de pression côté cathode (101), dans lequel le régulateur de pression côté cathode (101) est disposé entre l'alimentation en oxygène et le côté cathode (11) de la pile à combustible (10), le régulateur de pression côté anode (102) étant disposé entre l'alimentation en hydrogène et le côté anode (12) de la pile à combustible (10), le dispositif de pile à combustible comportant un dispositif de mesure de pression côté anode (92) et un dispositif de mesure de pression côté cathode (91), le dispositif de mesure de pression côté cathode (91) étant disposé entre le régulateur de pression côté cathode (101) et le côté cathode (11) de la pile à combustible (10), dans lequel le dispositif de détection de pression côté anode (92) est disposé entre le régulateur de pression côté anode (102) et le côté anode (12) de la pile à combustible (10), dans lequel le dispositif de pile à combustible comprend un dispositif de commande, dans lequel le dispositif de commande est relié au dispositif de détection de pression côté cathode (91), au dispositif de mesure de pression côté anode (92), au régulateur de pression côté cathode (101) et au régulateur de pression côté anode (102), le dispositif de commande étant conçu pour évaluer les pressions détectées par le dispositif de mesure de pression côté cathode (91) et le dispositif de mesure de pression côté anode (92), le dispositif de commande étant conçu pour commander le régulateur de pression côté cathode (101) et le régulateur de pression côté anode (102), le dispositif de commande ayant un premier mode de fonctionnement pour l'opération de commande, le dispositif de commande ayant un deuxième mode de fonctionnement, le deuxième mode de fonctionnement étant conçu pour faire fonctionner le dispositif de pile à combustible avec un trou dans la membrane, **caractérisé en ce que,** dans le circuit cathodique, la concentration en gaz inerte est comprise entre 30 % et 70 % en volume, de préférence entre 40 % et 60 % en volume, et dans le circuit anodique, la concentration en gaz inerte est comprise entre 30 % et 70 % en volume, de préférence entre 40 % et 60 % en volume.

7. Dispositif de pile à combustible selon la revendication 6, **caractérisé en ce que** le dispositif de mesure de pression côté cathode (91) est disposé dans le circuit cathodique, le dispositif de mesure de pression côté anode (92) étant disposé dans le circuit anodique.

8. Dispositif de pile à combustible selon l'une des revendications 6 à 7, **caractérisé en ce que le fait que** le dispositif de mesure de pression côté cathode (91) est disposé entre le régulateur de pression côté cathode (101) et le circuit cathodique, le dispositif de mesure de pression côté anode (92) étant disposé entre le régulateur de pression côté anode (102) et le circuit anodique.
